# EUROPÄISCHE PATENTANMELDUNG

(11) **EP 3 257 584 A1**
(43) Veröffentlichungstag der Anmeldung: **20.12.2017**
(21) Anmeldenummer: 16174291.1
(22) Anmeldetag: 14.06.2016
(51) Int. Cl.: B01L 3/00, G01N 35/08, G01N 33/49

(54) **VERFAHREN ZUR POSITIONIERUNG VON FLUIDVOLUMINA IN LEITUNGEN**

(71) Anmelder: Siemens Healthcare Diagnostics Products GmbH, 35041 Marburg (DE)
(72) Erfinder: Bach, Eberhard, 63857 Waldaschaff (DE); Meller, Paul, 61273 WEHRHEIM (DE); Otto, Ralf, 65195 WIESBADEN (DE)

(57) **Zusammenfassung**

Die vorliegende Erfindung betrifft den kontrollierten Transport von Fluidvolumina bzw. deren Positionierung in einer Leitung, insbesondere in Durchflussmesszellen (14). Insbesondere betrifft die Erfindung die Verwendung des Verfahrens in einem automatischen Analysegerät.

## Beschreibung

Die vorliegende Erfindung betrifft den kontrollierten Transport von Fluidvolumina bzw. deren Positionierung in einer Leitung. Insbesondere betrifft die Erfindung die Verwendung des Verfahrens in einem automatischen Analysegerät.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten, erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

In verschiedenen Funktionseinheiten eines automatischen Analysegerätes spielt der Transport von Flüssigkeiten durch Leitungen eine wichtige Rolle. Beispielsweise müssen Systemflüssigkeiten wie Wasser oder Waschlösungen für den Betrieb von Waschstationen für Pipettiernadeln aus Vorratsbehältern entnommen und über ein Schlauch- oder Rohrleitungssystem zu einem oder mehreren Zielorten transportiert werden. Nach Gebrauch müssen die Flüssigkeitsabfälle zu einem Sammelbehälter transportiert werden. Auch in Durchflussmesszellen, die typischerweise zu einer analytischen Einheit des Analysegeräts gehört, muss ein Volumen einer zu analysierenden flüssigen oder gasförmigen Probe transportiert und präzise im Bereich der analytischen Einheit, beispielsweise einer photometrischen Einheit, positioniert werden. Ein weiteres Beispiel sind Pipettiervorrichtungen, die mit einem Saugrohr an einem Ort ein Flüssigkeitsvolumen aufnehmen und es an einem anderen Ort wieder abgeben. Die Höhe der Flüssigkeitssäule in dem Saugrohr mit bekanntem Querschnitt definiert das angesaugte Volumen.

Typischerweise erfolgt der Transport von Fluidvolumina in den verschiedenen Leitungssystemen dadurch, dass eine Druckdifferenz in der Leitung erzeugt wird, beispielsweise durch eine Pumpe. Insbesondere der Transport von definierten Fluidvolumina, wie beispielsweise beim Ansaugen eines zu transferierenden Flüssigkeitsvolumens in eine Pipettiernadel, und die korrekte Positionierung eines Fluidvolumens innerhalb einer Leitung, wie beispielsweise bei der Positionierung einer Probe innerhalb einer Durchflussmesszelle, erfordern höchste Präzision.

Trotz des Einsatzes präziser Pumpen kann das tatsächlich geförderte Fluidvolumen von dem theoretisch erwarteten geförderten Fluidvolumen abweichen. Insbesondere wenn unterschiedliche Fluide, beispielsweise eine Flüssigkeit und Luft, in derselben Leitung befördert werden, kann die Pumpförderleistung beeinflusst werden. In Bezug auf eine Durchflussmesszelle kann dies zur Folge haben, dass eine zu analysierende flüssige oder gasförmige Probe während der Messung gar nicht im Bereich der analytischen Einheit positioniert ist und ein falscher Messwert ermittelt wird. In Bezug auf eine Pipettiervorrichtung kann dies zur Folge haben, dass ein falsches Volumen einer Flüssigkeit, beispielsweise einer Reagenz- oder einer Probenflüssigkeit, transferiert wird und ein fehlerhaftes Testergebnis entsteht.

Der Erfindung liegt also die Aufgabe zugrunde, die Beförderung eines Fluidvolumens mittels einer erzeugten Druckdifferenz in einer Leitung so zu steuern, dass eine korrekte Positionierung eines Fluidvolumens gewährleistet ist.

Die Aufgabe wird dadurch gelöst, dass an mindestens einer Messposition entlang der Längsachse der Leitung eine photometrische Einheit vorgesehen ist, mit der eine Extinktionsänderung detektierbar ist, wenn ein erstes Fluidvolumen die Messposition vollständig passiert hat und ein zweites Fluidvolumen im Bereich der Messposition positioniert ist, und wobei infolge der festgestellten Extinktionsänderung die Erzeugung der Druckdifferenz in der Leitung und damit der Transport des/der Fluidvolumina gestoppt wird.

Gegenstand der vorliegenden Erfindung ist also ein Verfahren zur Positionierung der Grenzfläche zwischen zwei Fluiden in einer zumindest teilweise transparenten Leitung, wobei entlang der Längsachse der Leitung, in einem transparenten Abschnitt der Leitung, mindestens eine erste photometrische Einheit vorgesehen ist. Das Verfahren umfasst folgende Schritte:
- Transport eines ersten und eines zweiten Fluidvolumens entlang der Leitung durch Erzeugen einer Druckdifferenz;
- während des Transports der Fluidvolumina Messen der Extinktion mittels der photometrischen Einheit an mindestens einer Messposition;
- Feststellen einer Extinktionsänderung, die anzeigt, dass das erste Fluidvolumen die Messposition vollständig passiert hat und das zweite Fluidvolumen im Bereich der Messposition positioniert ist,
wobei infolge der festgestellten Extinktionsänderung die Erzeugung der Druckdifferenz in der Leitung gestoppt wird.

Beim Transport unterschiedlicher Fluide, beispielsweise zweier unterschiedlicher, nicht mischbarer Flüssigkeiten oder einer Flüssigkeit und einem gasförmigen Fluid, wie beispielsweise Luft, entsteht eine Grenzfläche zwischen den beiden Fluiden. Beim Durchtritt der Grenzfläche durch die Messposition ändert sich die gemessene Extinktion, beispielsweise durch eine Meniskusbildung einer Flüssigkeit und/oder durch unterschiedliche Absorption der aneinandergrenzenden Fluide.

Die Leitung muss zumindest in dem Bereich, in dem eine photometrische Einheit vorgesehen ist, transparent, also lichtdurchlässig sein.

Eine photometrische Einheit umfasst eine Lichtquelle und einen Lichtdetektor, die so angeordnet sind, dass ein von der Lichtquelle ausgesandter Lichtstrahl die Leitung mehr oder weniger senkrecht zur Längsachse der Leitung durchtritt und nach dem Durchtritt der nicht-absorbierte Teil des Lichtstrahls auf den Lichtdetektor trifft.

Die Lichtquelle kann beispielsweise eine LED (Light Emitting Diode), eine Laserdiode, eine Glühlampe, eine Gasentladungslampe oder eine Lichtbogenlampe sein.

Der Lichtdetektor kann beispielsweise eine Photozelle, ein Siliziumphotodetektor, ein Avalanchephotodetektor, ein Photomultiplier oder eine Photodiode sein. Alternativ kann es sich bei dem Lichtdetektor um einen CCD-Sensor handeln. CCD-Sensoren bestehen aus einer Matrix oder einer Zeile mit lichtempfindlichen Photodioden. Die Verwendung eines CCD-Sensors ist insbesondere dann sinnvoll, wenn eine Messvorrichtung mehr als eine photometrische Einheit aufweist, beispielsweise dann, wenn Messungen bei verschiedenen Wellenlängen durchgeführt werden sollen und dazu mehrere Lichtquellen vorgesehen sind. Hier kann der CCD-Sensor als Lichtdetektor für jede der Lichtquellen dienen, was den apparativen Aufbau erheblich vereinfacht.

Grundsätzlich kann eine photometrische Einheit weiterhin noch Filter, optische Elemente (z.B. Linsen zum Aufbau eines Kondensors), Regelelektronik, Auswerte- und Ausleseelektronik und/oder eine Spannungsversorgung aufweisen.

Vorzugsweise ist entlang der Längsachse der Leitung, in einem transparenten Abschnitt der Leitung, stromabwärts (in Bezug auf die Haupttransportrichtung des Fluidvolumens) der ersten photometrischen Einheit eine zweite photometrische Einheit vorgesehen. In diesem Fall wird die Extinktion mittels der ersten photometrischen Einheit an einer ersten Messposition und mittels der zweiten photometrischen Einheit an einer zweiten Messposition gemessen, und die Erzeugung der Druckdifferenz in der Leitung wird gestoppt, wenn an der ersten oder an der ersten und an der zweiten Messposition eine Extinktionsänderung festgestellt wird, die anzeigt, dass das erste Fluidvolumen die erste oder die erste und die zweite Messposition vollständig passiert hat und das zweite Fluidvolumen im Bereich der ersten oder der ersten und der zweiten Messposition positioniert ist. Dies hat den Vorteil, dass die Positionierung über einen größeren Längenabschnitt der Leitung und in höherer Auflösung erfolgen kann. Dieser Effekt kann noch weiter verbessert werden, indem noch weitere photometrischen Einheiten stromabwärts der ersten bzw. der zweiten photometrischen Einheit vorgesehen werden.

Vorzugsweise ist daher noch weiter stromabwärts eine dritte photometrische Einheit vorgesehen. In diesem Fall wird die Extinktion mittels der ersten photometrischen Einheit an einer ersten Messposition und mittels der zweiten photometrischen Einheit an einer zweiten Messposition und mittels der dritten photometrischen Einheit an einer dritten Messposition gemessen, und die Erzeugung der Druckdifferenz in der Leitung wird gestoppt, wenn an der ersten oder an der ersten und an der zweiten Messposition oder an der ersten und an der zweiten und an der dritten Messposition eine Extinktionsänderung festgestellt wird, die anzeigt, dass das erste Fluidvolumen die erste oder die erste und die zweite Messposition oder die erste und die zweite und die dritte Messposition vollständig passiert hat und das zweite Fluidvolumen im Bereich der ersten oder der ersten und der zweiten oder der ersten und der zweiten und der dritten Messposition positioniert ist.

Entsprechend kann noch weiter stromabwärts eine vierte, fünfte, sechste, siebte, achte u.s.w. photometrische Einheit vorgesehen sein.

Die Extinktionsmessung kann kontinuierlich erfolgen, oder es können mehrere Einzelmessungen nacheinander durchgeführt werden.

Der Transport der Fluidvolumina entlang der Leitung erfolgt durch Erzeugen einer Druckdifferenz in der Leitung. Zur Erzeugung der Druckdifferenz in der Leitung kann eine Pumpe vorgesehen sein, z.B. eine Membranpumpe. Alternativ ist auch die Erzeugung einer Druckdifferenz in der Leitung durch Schwerkraft vorstellbar.

Die Erzeugung der Druckdifferenz mittels einer Pumpe kann kontinuierlich erfolgen, oder es können zum Beispiel Saughübe ausgeführt werden, die ein schrittweises Einsaugen und einen schrittweisen Transport der Fluidvolumina bewirken. Im letzten Fall wird vorzugsweise nach jedem Saughub die Extinktion mittels der ersten oder der ersten und der zweiten oder der ersten und der zweiten und der dritten photometrischen Einheit u.s.w. gemessen.

In den Fällen, wo eine Pumpe zum Einsatz kommt, kann die Erzeugung der Druckdifferenz in der Leitung gestoppt werden, indem die Pumpe zum Stillstand gebracht wird. Alternativ können ein oder mehrere Absperrorgane, z.B. ein Ventil, ein Absperrschieber oder eine Absperrklappe vorgesehen sein, um den Fluidstrom zu unterbrechen.

Bei der Leitung kann es sich beispielsweise um eine Durchflussmesszelle (z.B. wie in der WO-A2-2012151358 beschrieben), das Saugrohr einer Pipettiervorrichtung (z.B. wie in der US-A-5734468 beschrieben) oder einen Schlauch oder ein Rohr zur Entnahme von Flüssigkeit aus einem Vorratsbehälter handeln. Derartige Einrichtungen kommen in modernen Analysegeräten zum Einsatz, so dass sich das erfindungsgemäße Verfahren insbesondere zur Anwendung in automatischen Analysegeräten eignet, insbesondere dann, wenn ohnehin photometrische Einheiten an den entsprechenden Leitungen vorgesehen sind, um optischen Eigenschaften von Probenflüssigkeiten zu messen.

Bei den mit dem erfindungsgemäßen Verfahren zu positionierenden Fluidvolumina kann es sich um Flüssigkeits- oder Gasvolumina handeln. Bei den Flüssigkeiten kann es sich zum Beispiel um Wasser, Referenzlösungen, Waschlösungen, Reagenzflüssigkeiten oder Körperflüssigkeitsproben, wie beispielsweise Blut, Plasma, Serum oder Urin, handeln. Bei den gasförmigen Fluiden handelt es sich in erster Linie um Luft.

Eine Ausführungsform betrifft die Verwendung des erfindungsgemäßen Verfahrens und zwar für die Bereitstellung isolierter Flüssigkeitssäulen in einer Durchflussmesszelle, indem eine definierte Luftsäule zwischen zwei Flüssigkeitssäulen positioniert wird. Dies stellt sicher, dass eine Vermischung von zwei aufeinanderfolgenden Flüssigkeitssäulen vermieden wird. Die Erfindung betrifft also ferner ein Verfahren zur Bereitstellung isolierter Flüssigkeitssäulen in einer zumindest teilweise transparenten Durchflussmesszelle, wobei entlang der Längsachse der Durchflussmesszelle in einem transparenten Abschnitt der Durchflussmesszelle, mindestens eine erste photometrische Einheit vorgesehen ist. Das Verfahren umfasst folgende Schritte:
- Abgabe eines ersten Flüssigkeitsvolumens in die Durchflussmesszelle;
- Einsaugen des ersten Flüssigkeitsvolumens und Transport der von dem ersten Flüssigkeitsvolumen gebildeten Flüssigkeitssäule entlang der Durchflussmesszelle durch Erzeugen einer Druckdifferenz;
- Einsaugen eines Luftvolumens nachdem das erste Flüssigkeitsvolumen vollständig in die Durchflussmesszelle eingesaugt wurde;
- Messen der Extinktion mittels der photometrischen Einheit an mindestens einer Messposition;
- Feststellen einer Extinktionsänderung, die anzeigt, dass die Flüssigkeitssäule des ersten Flüssigkeitsvolumens die Messposition vollständig passiert hat und das Luftvolumen im Bereich der Messposition positioniert ist,
wobei infolge der festgestellten Extinktionsänderung die Erzeugung einer Druckdifferenz in der Durchflussmesszelle gestoppt wird und dann ein zweites Flüssigkeitsvolumen in die Durchflussmesszelle abgegeben wird.

Ein weiterer Gegenstand der vorliegenden Erfindung ist ein automatisches Analysegerät mit einer Steuereinrichtung, wobei die Steuereinrichtung so konfiguriert ist, dass sie eines der oben beschriebenen Verfahren zur Positionierung der Grenzfläche zwischen zwei Fluiden bzw. zur Bereitstellung isolierter Flüssigkeitssäulen in einer transparenten Leitung des Analysegeräts steuert.

In einer Ausführungsform umfasst das automatische Analysegerät
- eine Pipettiervorrichtung,
- eine zumindest teilweise transparente Durchflussmesszelle,
- mindestens eine entlang der Längsachse der Durchflussmesszelle, in einem transparenten Abschnitt der Durchflussmesszelle angeordnete erste photometrische Einheit,
- eine Pumpe zur Erzeugung einer Druckdifferenz in der Durchflussmesszelle, und
- eine Steuereinrichtung.

Die Steuereinrichtung ist dabei so konfiguriert, dass sie ein Verfahren zur Positionierung der Grenzfläche zwischen zwei Fluiden in der Durchflussmesszelle mit den folgenden Schritten steuert:
- Transport eines ersten und eines zweiten Fluidvolumens entlang der Durchflussmesszelle durch Erzeugen einer Druckdifferenz;
- während des Transports der Fluidvolumina Messen der Extinktion mittels der photometrischen Einheit an mindestens einer Messposition;
- Feststellen einer Extinktionsänderung, die anzeigt, dass das erste Fluidvolumen die Messposition vollständig passiert hat und das zweite Fluidvolumen im Bereich der Messposition positioniert ist,
wobei infolge der festgestellten Extinktionsänderung die Erzeugung der Druckdifferenz in der Durchflussmesszelle gestoppt wird.

In einer anderen Ausführungsform umfasst das automatische Analysegerät
- eine Pipettiervorrichtung,
- eine zumindest teilweise transparente Durchflussmesszelle,
- mindestens eine entlang der Längsachse der Durchflussmesszelle, in einem transparenten Abschnitt der Durchflussmesszelle angeordnete erste photometrische Einheit,
- eine Pumpe zur Erzeugung einer Druckdifferenz in der Durchflussmesszelle, und
- eine Steuereinrichtung,

Die Steuereinrichtung ist dabei so konfiguriert, dass sie ein Verfahren zur Bereitstellung isolierter Flüssigkeitssäulen in der Durchflussmesszelle mit den folgenden Schritten steuert:
- Abgabe eines ersten Flüssigkeitsvolumens in die Durchflussmesszelle;
- Einsaugen des ersten Flüssigkeitsvolumens und Transport der von dem ersten Flüssigkeitsvolumen gebildeten Flüssigkeitssäule entlang der Durchflussmesszelle durch Erzeugen einer Druckdifferenz;
- Einsaugen eines Luftvolumens nachdem das erste Flüssigkeitsvolumen vollständig in die Durchflussmesszelle eingesaugt wurde;
- Messen der Extinktion mittels der photometrischen Einheit an mindestens einer Messposition;
- Feststellen einer Extinktionsänderung, die anzeigt, dass die Flüssigkeitssäule des ersten Flüssigkeitsvolumens die Messposition vollständig passiert hat und das Luftvolumen im Bereich der Messposition positioniert ist,
wobei infolge der festgestellten Extinktionsänderung die Erzeugung eines Unterdrucks in der Durchflussmesszelle gestoppt wird und dann ein zweites Flüssigkeitsvolumen in die Durchflussmesszelle abgegeben wird.

Die Abgabe der Flüssigkeitsvolumina in die Durchflussmesszelle kann mit der Pipettiervorrichtung erfolgen.

In noch einer anderen Ausführungsform umfasst das automatische Analysegerät
- eine Pipettiervorrichtung mit einem zumindest teilweise transparenten Saugrohr,
- mindestens eine entlang der Längsachse des Saugrohrs, in einem transparenten Abschnitt des Saugrohrs angeordnete erste photometrische Einheit,
- eine Pumpe zur Erzeugung einer Druckdifferenz in dem Saugrohr, und
- eine Steuereinrichtung.

Die Steuereinrichtung ist dabei so konfiguriert, dass sie ein Verfahren zur Positionierung der Grenzfläche zwischen zwei Fluiden in dem Saugrohr mit den folgenden Schritten steuert:
- Transport eines ersten und eines zweiten Fluidvolumens entlang des Saugrohrs durch Erzeugen einer Druckdifferenz;
- während des Transports der Fluidvolumina Messen der Extinktion mittels der photometrischen Einheit an mindestens einer Messposition;
- Feststellen einer Extinktionsänderung, die anzeigt, dass das erste Fluidvolumen die Messposition vollständig passiert hat und das zweite Fluidvolumen im Bereich der Messposition positioniert ist,
wobei infolge der festgestellten Extinktionsänderung die Erzeugung der Druckdifferenz in dem Saugrohr gestoppt wird.

Bei einem Ansaugvorgang handelt es sich typischerweise bei dem ersten Fluidvolumen um ein Luftvolumen und bei dem zweiten Fluidvolumen um ein Flüssigkeitsvolumen, wie beispielsweise um eine zu analysierende Körperflüssigkeitsprobe oder um eine Reagenzflüssigkeit. Bei einem Dispensiervorgang ist die Reihenfolge typischerweise umgekehrt.

Die Erfindung wird im Folgenden anhand einer Zeichnung erläutert.

Darin zeigen
- FIG. 1: ein erfindungsgemäßes automatisches Analysegerät 1;
- FIG. 2: eine Durchflussmesszelle 14 eines automatischen Analysegeräts 1; und
- FIG. 3: Extinktionsmesswerte der Durchflussmesszelle 14 aus FIG. 2.

Gleiche Teile sind in allen Figuren mit denselben Bezugszeichen versehen.

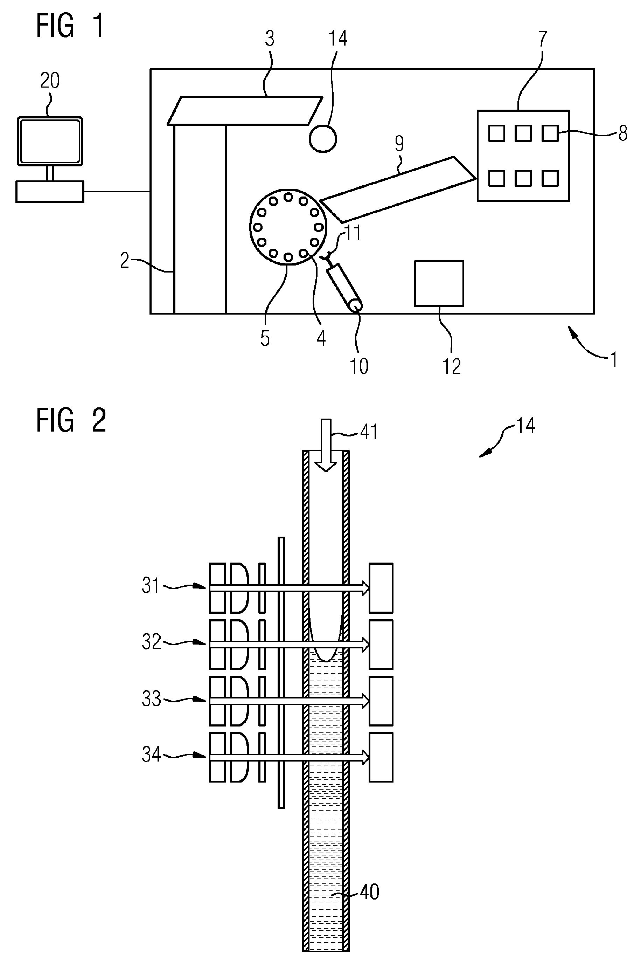

FIG. 1 ist eine schematische Darstellung eines automatischen Analysegeräts 1 mit einigen darin enthaltenen Bauteilen. Hierbei werden nur die wichtigsten Bauteile stark vereinfacht dargestellt, um die grundsätzliche Funktion des automatischen Analysegeräts 1 zu erläutern, ohne hierbei detailliert die einzelnen Teile jedes Bauteils darzustellen.

Das automatische Analysegerät 1 ist dafür ausgebildet, vollautomatisch verschiedenste Analysen von Blut oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Patientenproben werden dem automatischen Analysegerät 1 auf nicht näher dargestellten Schlitten über eine Zuführungsschiene 2 zugeführt. Informationen hinsichtlich der pro Probe durchzuführenden Analysen können beispielsweise mittels auf den Probengefäßen angebrachten Strichcodes übergeben werden, die in dem automatischen Analysegerät 1 ausgelesen werden. Aus den Probengefäßen werden mit Hilfe einer ersten Pipettiervorrichtung 3 Probenaliquots mittels einer Pipettiernadel entnommen.

Die Probenaliquots werden einerseits ebenfalls nicht näher dargestellten Küvetten zugeführt, die in Aufnahmepositionen 4 einer drehbaren, auf 37 °C temperierten Inkubationseinrichtung 5 angeordnet sind, und andererseits wird jeweils ein Aliquot einer Probe in eine Durchflussmesszelle 14 transferiert, in der photometrisch analysiert wird, ob in der Probenflüssigkeit Substanzen wie Hämoglobin, Bilirubin oder Lipide enthalten sind, die mit einer Analytbestimmung interferieren könnten. In dem auf ca. 8-10 °C gekühlten Reagenzgefäßvorratsbehälter 7 werden Reagenzgefäße 8 mit verschiedenen Reagenzflüssigkeiten aufbewahrt. Reagenzflüssigkeit wird mittels der Pipettiernadel einer zweiten Pipettiervorrichtung 9 aus einem Reagenzgefäß 8 entnommen und zur Bereitstellung eines Reaktionsansatzes in eine Küvette in der Inkubationseinrichtung 5 abgegeben. Nach der Inkubationszeit wird die Küvette mit dem Reaktionsansatz von einem Transferarm 10 mit einem Greifer 11 von der Inkubationseinrichtung 5 in eine photometrische Messeinheit 12 transportiert, wo die Extinktion des Reaktionsansatzes gemessen wird.

Der gesamte Prozess wird von einer Steuereinheit 20, wie z.B. von einem über eine Datenleitung angeschlossenen Rechner gesteuert, unterstützt durch eine Vielzahl weiterer, nicht näher dargestellter elektronischer Schaltungen und Mikroprozessoren innerhalb des automatischen Analysegeräts 1 und seiner Bauteile.

FIG. 2 zeigt einen Teil der Durchflussmesszelle 14 aus dem automatischen Analysegerät 1. Die Flussrichtung der in der Durchflussmesszelle 14 transportierten Fluide verläuft von oben nach unten. Am oberen Ende weist die Durchflussmesszelle 14 eine nicht näher dargestellte, trichterförmige Öffnung zur Aufnahme der Fluide auf. Am unteren Ende weist die Durchflussmesszelle 14 einen nicht näher dargestellten Anschluss an eine Saugleitung auf, die an eine Absaugpumpe angeschlossen ist. Die Absaugpumpe führt Saughübe aus, die ein schrittweises Einsaugen und schrittweisen Transport der Fluidvolumina bewirken.

Entlang der Längsachse der transparenten Durchflussmesszelle 14 sind hintereinander vier photometrische Einheiten 31-34 angeordnet, die jeweils von links nach rechts gesehen aus einer Leuchtdiode, einer Linse, einem Filter, einer Apertur und einem Detektor bestehen.

Nach jedem Saughub wird mit jeder der photometrischen Einheiten 31-34 die Extinktion gemessen und an eine nicht dargestellte Auswerteeinheit gesendet.

Dargestellt ist hier eine Situation, in der sich Wasser 40 als Referenzflüssigkeit in der Durchflussmesszelle 14 befindet und in der als nächstes eine Probenflüssigkeit transportiert werden soll. Um eine Vermischung von Referenz- und Probenflüssigkeit zu vermeiden, soll ein definiertes Luftvolumen 41 zwischen den beiden Flüssigkeitssäulen positioniert werden. Dazu ist eine nicht näher dargestellte Steuereinrichtung so konfiguriert, dass infolge einer durch die Auswertung der chronologischen Extinktionsmesswerte der ersten und/oder zweiten photometrischen Einheit 31, 32 festgestellte, extreme Extinktionsänderung, die anzeigt, dass sich Luft im Bereich der ersten Messposition und die menikusförmige Grenzfläche zwischen Referenzflüssigkeit 40 und Luft im Bereich der zweiten Messposition befindet, die Pumpe zum Stillstand gebracht wird. Dadurch wird der Transport der Fluide in der Durchflussmesszelle 14 gestoppt, und die Probenflüssigkeit kann nun in die Durchflussmesszelle 14 abgegeben werden.

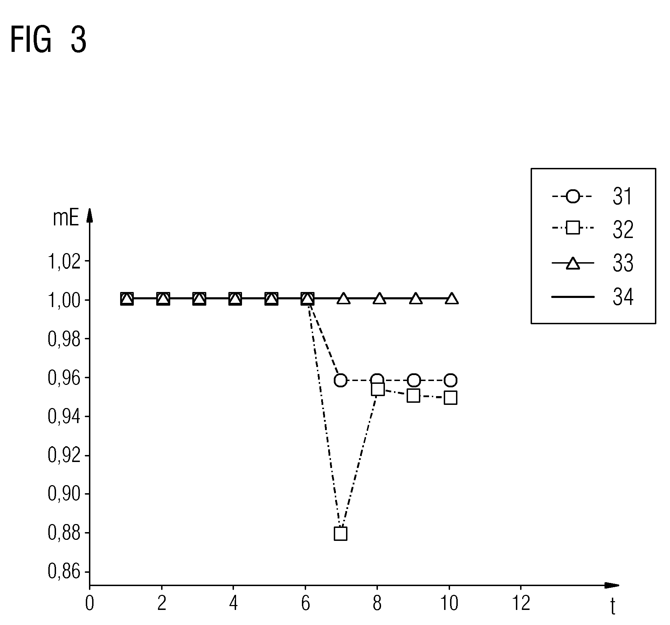

FIG. 3 zeigt die Extinktionsmesswerte der vier photometrischen Einheiten 31-34 (in willkürlichen Einheiten mE) über die Zeit. Während der Messungen 1-6 wird die Referenzflüssigkeit 40 schrittweise entlang der Durchflussmesszelle gepumpt, und die Flüssigkeitssäule der Referenzflüssigkeit 40 erstreckt sich über alle 4 photometrischen Einheiten 31-34; es wird eine konstante Extinktion gemessen. Während der Messung 7 wird sowohl mit der ersten photometrischen Einheit 31 als auch mit der zweiten photometrischen Einheit 32 eine Extinktionsänderung gemessen, während die Extinktion, die an den weiter unten gelegenen photometrischen Einheiten 33 und 34 gemessen wird, weiterhin konstant ist. Messung 7 zeigt den Zeitpunkt oder Zustand der Durchflussmesszelle aus FIG. 2. Infolge der Extinktionsänderungen an der ersten und zweiten Messposition wird die Pumpe gestoppt.

### BEZUGSZEICHENLISTE

- 1: Analysegerät
- 2: Zuführungsschiene
- 3: Pipettiervorrichtung
- 4: Aufnahmeposition
- 5: Inkubationseinrichtung
- 7: Reagenzgefäßvorratsbehälter
- 8: Reagenzgefäß
- 9: Pipettiervorrichtung
- 10: Transferarm
- 11: Greifer
- 12: Messeinheit
- 14: Durchflussmesszelle
- 20: Steuereinheit

- 31, 32, 33, 34: photometrische Einheit

- 40: Referenzflüssigkeit
- 41: Luftvolumen

## Patentansprüche

1. Verfahren zur Positionierung der Grenzfläche zwischen zwei Fluiden in einer zumindest teilweise transparenten Leitung (14), wobei entlang der Längsachse der Leitung (14), in einem transparenten Abschnitt der Leitung (14) mindestens eine erste photometrische Einheit (31) vorgesehen ist, und wobei das Verfahren folgende Schritte umfasst:
• Transport eines ersten und eines zweiten Fluidvolumens entlang der Leitung (14) durch Erzeugen einer Druckdifferenz;
• während des Transports der Fluidvolumina Messen der Extinktion mittels der photometrischen Einheit (31) an mindestens einer Messposition;
• Feststellen einer Extinktionsänderung, die anzeigt, dass das erste Fluidvolumen die Messposition vollständig passiert hat und das zweite Fluidvolumen im Bereich der Messposition positioniert ist,
**dadurch gekennzeichnet, dass**
infolge der festgestellten Extinktionsänderung die Erzeugung der Druckdifferenz in der Leitung (14) gestoppt wird.

2. Verfahren gemäß Anspruch 1, wobei entlang der Längsachse der Leitung (14), in einem transparenten Abschnitt der Leitung (14), stromabwärts der ersten photometrischen Einheit (31) eine zweite photometrische Einheit (32) vorgesehen ist und die Extinktion mittels der ersten photometrischen Einheit (31) an einer ersten Messposition und mittels der zweiten photometrischen Einheit (32) an einer zweiten Messposition gemessen wird und wobei infolge einer an der ersten oder an der ersten und an der zweiten Messposition festgestellten Extinktionsänderung, die anzeigt, dass das erste Fluidvolumen die erste oder die erste und die zweite Messposition vollständig passiert hat und das zweite Fluidvolumen im Bereich der ersten oder der ersten und der zweiten Messposition positioniert ist, die Erzeugung der Druckdifferenz in der Leitung (14) gestoppt wird.

3. Verfahren gemäß Anspruch 1, wobei entlang der Längsachse der Leitung (14), in einem transparenten Abschnitt der Leitung (14), stromabwärts der ersten photometrischen Einheit (31) eine zweite (32) und noch weiter stromabwärts eine dritte photometrische Einheit (33) vorgesehen ist, und die Extinktion mittels der ersten photometrischen Einheit (31) an einer ersten Messposition und mittels der zweiten photometrischen Einheit (32) an einer zweiten Messposition und mittels der dritten photometrischen Einheit (33) an einer dritten Messposition gemessen wird und wobei infolge einer an der ersten oder an der ersten und an der zweiten Messposition oder an der ersten und an der zweiten und an der dritten Messposition festgestellten Extinktionsänderung, die anzeigt, dass das erste Fluidvolumen die erste oder die erste und die zweite Messposition oder die erste und die zweite und die dritte Messposition vollständig passiert hat und das zweite Fluidvolumen im Bereich der ersten oder der ersten und der zweiten oder der ersten und der zweiten und der dritten Messposition positioniert ist, die Erzeugung der Druckdifferenz in der Leitung (14) gestoppt wird.

4. Verfahren gemäß einem der vorhergehenden Ansprüche, wobei zur Erzeugung der Druckdifferenz in der Leitung (14) eine Pumpe vorgesehen ist.

5. Verfahren gemäß Anspruch 4, wobei mit der Pumpe Saughübe ausgeführt werden, die ein schrittweises Einsaugen und schrittweisen Transport der Fluidvolumina bewirken.

6. Verfahren gemäß Anspruch 5, wobei nach jedem Saughub die Extinktion mittels der ersten (31) oder der ersten und der zweiten (31, 32) oder der ersten und der zweiten und der dritten (31, 32, 33) photometrischen Einheit gemessen wird.

7. Verfahren gemäß einem der Ansprüche 4 bis 6, wobei die Erzeugung der Druckdifferenz in der Leitung (14) gestoppt wird, indem die Pumpe zum Stillstand gebracht wird.

8. Verfahren gemäß einem der vorhergehenden Ansprüche, wobei die Leitung eine Durchflussmesszelle (14) ist.

9. Verfahren gemäß einem der Ansprüche 1 bis 7, wobei die Leitung das Saugrohr einer Pipettiervorrichtung ist.

10. Verfahren gemäß einem der Ansprüche 1 bis 7, wobei die Leitung ein Schlauch oder Rohr zur Entnahme von Flüssigkeit aus einem Vorratsbehälter ist.

11. Verfahren zur Bereitstellung isolierter Flüssigkeitssäulen in einer zumindest teilweise transparenten Durchflussmesszelle (14), wobei entlang der Längsachse der Durchflussmesszelle (14), in einem transparenten Abschnitt der Durchflussmesszelle (14) mindestens eine erste photometrische Einheit (31) vorgesehen ist, und wobei das Verfahren folgende Schritte umfasst:
• Abgabe eines ersten Flüssigkeitsvolumens in die Durchflussmesszelle (14);
• Einsaugen des ersten Flüssigkeitsvolumens und Transport der von dem ersten Flüssigkeitsvolumen gebildeten Flüssigkeitssäule entlang der Durchflussmesszelle (14) durch Erzeugen einer Druckdifferenz;
• Einsaugen eines Luftvolumens nachdem das erste Flüssigkeitsvolumen vollständig in die Durchflussmesszelle (14) eingesaugt wurde;
• Messen der Extinktion mittels der photometrischen Einheit (31) an mindestens einer Messposition;
• Feststellen einer Extinktionsänderung, die anzeigt, dass die Flüssigkeitssäule des ersten Flüssigkeitsvolumens die Messposition vollständig passiert hat und das Luftvolumen im Bereich der Messposition positioniert ist,
**dadurch gekennzeichnet, dass**
infolge der festgestellten Extinktionsänderung die Erzeugung einer Druckdifferenz in der Durchflussmesszelle (14) gestoppt wird und dann ein zweites Flüssigkeitsvolumen in die Durchflussmesszelle (14) abgegeben wird.

12. Automatisches Analysegerät (1) umfassend
• eine Pipettiervorrichtung (3),
• eine zumindest teilweise transparente Durchflussmesszelle (14),
• mindestens eine entlang der Längsachse der Durchflussmesszelle (14), in einem transparenten Abschnitt der Durchflussmesszelle (14) angeordnete erste photometrische Einheit (31),
• eine Pumpe zur Erzeugung einer Druckdifferenz in der Durchflussmesszelle (14), und
• eine Steuereinrichtung,
wobei die Steuereinrichtung so konfiguriert ist, dass sie ein Verfahren zur Positionierung der Grenzfläche zwischen zwei Fluiden in der Durchflussmesszelle (14) mit den folgenden Schritten steuert:
• Transport eines ersten und eines zweiten Fluidvolumens entlang der Durchflussmesszelle (14) durch Erzeugen einer Druckdifferenz;
• während des Transports der Fluidvolumina Messen der Extinktion mittels der photometrischen Einheit (31) an mindestens einer Messposition;
• Feststellen einer Extinktionsänderung, die anzeigt, dass das erste Fluidvolumen die Messposition vollständig passiert hat und das zweite Fluidvolumen im Bereich der Messposition positioniert ist,
**dadurch gekennzeichnet, dass**
infolge der festgestellten Extinktionsänderung die Erzeugung der Druckdifferenz in der Durchflussmesszelle (14) gestoppt wird.

13. Automatisches Analysegerät (1) umfassend
• eine Pipettiervorrichtung (3),
• eine zumindest teilweise transparente Durchflussmesszelle (14),
• mindestens eine entlang der Längsachse der Durchflussmesszelle (14), in einem transparenten Abschnitt der Durchflussmesszelle (14) angeordnete erste photometrische Einheit (31),
• eine Pumpe zur Erzeugung einer Druckdifferenz in der Durchflussmesszelle, und
• eine Steuereinrichtung,
wobei die Steuereinrichtung so konfiguriert ist, dass sie ein Verfahren zur Bereitstellung isolierter Flüssigkeitssäulen in der Durchflussmesszelle (14) mit den folgenden Schritten steuert:
• Abgabe eines ersten Flüssigkeitsvolumens in die Durchflussmesszelle (14);
• Einsaugen des ersten Flüssigkeitsvolumens und Transport der von dem ersten Flüssigkeitsvolumen gebildeten Flüssigkeitssäule entlang der Durchflussmesszelle (14) durch Erzeugen einer Druckdifferenz;
• Einsaugen eines Luftvolumens nachdem das erste Flüssigkeitsvolumen vollständig in die Durchflussmesszelle (14) eingesaugt wurde;
• Messen der Extinktion mittels der photometrischen Einheit (31) an mindestens einer Messposition;
• Feststellen einer Extinktionsänderung, die anzeigt, dass die Flüssigkeitssäule des ersten Flüssigkeitsvolumens die Messposition vollständig passiert hat und das Luftvolumen im Bereich der Messposition positioniert ist,
**dadurch gekennzeichnet, dass**
infolge der festgestellten Extinktionsänderung die Erzeugung eines Unterdrucks in der Durchflussmesszelle (14) gestoppt wird und dann ein zweites Flüssigkeitsvolumen in die Durchflussmesszelle (14) abgegeben wird.

14. Automatisches Analysegerät (1) umfassend
• eine Pipettiervorrichtung (3, 9) mit einem zumindest teilweise transparenten Saugrohr,
• mindestens eine entlang der Längsachse des Saugrohrs, in einem transparenten Abschnitt des Saugrohrs angeordnete erste photometrische Einheit,
• eine Pumpe zur Erzeugung einer Druckdifferenz in dem Saugrohr, und
• eine Steuereinrichtung,
wobei die Steuereinrichtung so konfiguriert ist, dass sie ein Verfahren zur Positionierung der Grenzfläche zwischen zwei Fluiden in dem Saugrohr mit den folgenden Schritten steuert:
• Transport eines ersten und eines zweiten Fluidvolumens entlang des Saugrohrs durch Erzeugen einer Druckdifferenz;
• während des Transports der Fluidvolumina Messen der Extinktion mittels der photometrischen Einheit an mindestens einer Messposition;
• Feststellen einer Extinktionsänderung, die anzeigt, dass das erste Fluidvolumen die Messposition vollständig passiert hat und das zweite Fluidvolumen im Bereich der Messposition positioniert ist,
**dadurch gekennzeichnet, dass**
infolge der festgestellten Extinktionsänderung die Erzeugung der Druckdifferenz in dem Saugrohr gestoppt wird.
